# EUROPEAN PATENT SPECIFICATION

(11) **EP 3 552 471 B1**
(45) Date of publication and mention of the grant of the patent: **10.11.2021**
(21) Application number: 17879456.6
(22) Date of filing: 06.12.2017
(51) Int. Cl.: A01D 34/416

(54) **GRASS-CUTTING MACHINE**
GRASSCHNEIDEMASCHINE
TAILLE-HERBE

(30) Priority: 06.12.2016 CN 201611108348; 23.03.2017 CN 201710180519
(43) Date of publication of application: 16.10.2019
(73) Proprietor: Positec Power Tools (Suzhou) Co., Ltd, Suzhou, Jiangsu 215123 (CN)
(72) Inventor: ZHA, Xiahong, Suzhou Jiangsu 215123 (CN); ZHAO, Fengli, Suzhou Jiangsu 215123 (CN); YANG, Xueyu, Suzhou Jiangsu 215123 (CN)
(74) Representative: Dentons UK and Middle East LLP
(86) International application number: PCT/CN2017/114836
(87) International publication number: WO 2018/103666

(56) References cited:
- EP-A1- 2 835 045
- EP-A1- 3 025 573
- EP-A1- 3 143 860
- CN-A- 103 460 889
- CN-A- 104 663 113
- CN-U- 203 788 741
- CN-U- 206 506 877
- CN-Y- 2 459 863
- JP-A- H01 141 518

## Description

### BACKGROUND

### Technical Field

The embodiments of the present disclosure relate to a string trimmer.

### Related Art

String trimmers are widely applied to cutting of private and public lawns. Currently, a trimmer line provided on a string trimmer rotates along with a line container and cuts and trims grass with different heights on a lawn. Because the work normally involves continuous scraping, the trimmer line is consumed rapidly. However, during the use of the string trimmer, an operator cannot clearly examine the current usage of the trimmer line, and the trimmer line may be used up and fail to be changed or fed. As a result, time and labor are wasted, and the use is inconvenient.

Document EP 3 025 573 A1 discloses a string trimmer according to the preamble of claim 1.

### SUMMARY

Based on this, it is necessary to provide a string trimmer having a function of reminding the remainder and/usage of a trimmer line.

A string trimmer, comprising: a housing; a line storage device, configured to accommodate a trimmer line; a trimmer head, having a line eyelet, and the trimmer line passing through the line eyelet; a motor, configured to drive the trimmer head to rotate, to enable a length of the trimmer line that has passed through the line eyelet to perform cutting work; a release mechanism, capable of releasing the trimmer line, to increase the length of the trimmer line that has passed through the line eyelet; and a calculation unit, configured to respond to a release signal to calculate the usage and/or remainder of the trimmer line; and a reminder unit, configured to send a reminder signal according to the usage and/or remainder of the trimmer line calculated by the calculation unit to remind a user.

In an embodiment, the reminder unit comprises a display, and the display is configured to display the usage and/or remainder of the trimmer line.

In an embodiment, the display outputs a display result when the remainder of the trimmer line calculated by the calculation unit is less than a first preset value or the usage of the trimmer line calculated by the calculation unit exceeds a second preset value, to remind the user that the remainder of the trimmer line is insufficient.

In an embodiment, the reminder unit comprises an alarm, and the alarm sends an alarm signal when the remainder of the trimmer line calculated by the calculation unit is less than a first preset value or the usage of the trimmer line calculated by the calculation unit exceeds a second preset value, to remind the user that the remainder of the trimmer line is insufficient.

In an embodiment, the value range of the first preset value is 5% to 15% of the initial sum of the trimmer line, or the first preset value is a quantity of 25 times to 50 times that the release mechanism can release the trimmer line.

In an embodiment, wherein the value range of the second preset value is 85% to 95% of the initial sum of the trimmer line.

In an embodiment, the reminder unit further comprises a wireless transmission module, and the wireless transmission module transmits the usage and/or remainder of the trimmer line calculated by the calculation unit a last time to a mobile phone client of the user.

In an embodiment, the calculation unit comprises a calculator and a reset switch, the calculator may calculate the usage of the trimmer line according to the release signal, and the reset switch is configured to reset the calculator.

In an embodiment, wherein the calculation unit further comprises a memory and a processor, the memory is configured to store the usable initial sum of the trimmer line, the processor is configured to: acquire the initial sum and calculate a difference between the initial sum and the usage of the trimmer line, and send a prompt signal when the difference is less than or equal to a preset value, and the reminder unit is configured to send the reminder signal according to the prompt signal.

In an embodiment, wherein the calculation unit comprises a calculator and a reset switch, the calculator is configured to calculate the remainder of the trimmer line according to the release signal, and the reset switch is configured to reset the remainder of the trimmer line in the calculator.

In an embodiment, wherein the calculation unit comprises a memory and a processor, the memory is configured to store the usable initial sum of the trimmer line, the processor is configured to: acquire the remainder of the trimmer line, and generate a prompt signal when the remainder of the trimmer line is less than or equal to a preset value, and the reminder unit is configured to send the reminder signal according to the prompt signal.

In an embodiment, the release mechanism responds to each release signal to start to release the trimmer line, when the release mechanism receives one release signal, the release mechanism is started once, and the length of the trimmer line that has passed through the line eyelet is increased by once, and the calculation unit calculates the usage and/or remainder of the trimmer line according to a quantity of times of the release signal.

In an embodiment, the string trimmer further comprises a start switch, and the start switch is configured to generate a start signal according to an operation of the user, to control the motor to start or stop; and the release signal comprises the start signal, the release mechanism releases the trimmer line according to the start signal, and the calculation unit is configured to calculate the usage and/or remainder of the trimmer line according to the start signal.

In an embodiment, wherein the calculation unit comprises a toggle switch linked to the start switch, the toggle switch is turned on accordingly after the start switch is pressed, and the calculation unit correspondingly increases and decreases the usage and remainder of the trimmer line respectively according to a start signal of the toggle switch.

In an embodiment, the string trimmer further comprises a manual release switch, and the release signal further comprises a manual release signal; and the manual release switch is configured to generate the manual release signal according to an operation of the user, the release mechanism releases the trimmer line according to the manual release signal, and the calculation unit is further configured to calculate the usage and/or remainder of the trimmer line according to the manual release signal.

In an embodiment, the calculation unit comprises a toggle switch linked to the start switch and the manual release switch, the toggle switch is turned on accordingly after the start switch or the manual release switch is pressed, and the calculation unit correspondingly increases and decreases the usage and remainder of the trimmer line respectively according to a start signal of the toggle switch.

In an embodiment, wherein the string trimmer further comprises a manual release switch, and the release signal comprises a manual release signal; and the manual release switch generates the manual release signal according to an operation of the user, the release mechanism releases the trimmer line according to the manual release signal, and the calculation unit is configured to calculate the usage and/or remainder of the trimmer line according to the manual release signal.

In an embodiment, the calculation unit comprises a toggle switch linked to the manual release switch, the toggle switch is turned on accordingly after the manual release switch is pressed, and the calculation unit correspondingly increases and decreases the usage and remainder of the trimmer line respectively according to a start signal of the toggle switch.

In an embodiment, the release signal comprises a smart release signal; and the release mechanism comprises a smart release mechanism configured to control the trimmer line to automatically release the trimmer line, and when the length of the trimmer line that has passed through the line eyelet decreases with wear in a work process of the string trimmer, and the smart release mechanism detects a centrifugal force change after the trimmer line becomes shorter with wear, starts to automatically release the trimmer line, and generates the smart release signal.

In an embodiment, the release signal comprises a smart release signal; and a smart release system configured to control the trimmer line to automatically release the trimmer line is disposed in the string trimmer, and the smart release system compares a specific parameter representing a current length of the trimmer line with a preset parameter, and generates the smart release signal according to a result of the comparison.

In an embodiment, the calculation unit is configured to directly calculate the usage and/or remainder of the trimmer line according to the smart release signal.

In an embodiment, the string trimmer further comprises a start switch, and the start switch is configured to generate a start signal according to an operation of the user, to control the motor to start or stop; and the calculation unit is further configured to calculate the usage and/or remainder of the trimmer line according to the smart release signal, and the calculation unit is further configured to calculate the usage and/or remainder of the trimmer line according to the start signal.

In an embodiment, the smart release system comprises a detection module and a controller that stores the preset parameter, the detection module is configured to detect the specific parameter that represents the length of the trimmer line, the controller is configured to: compare the detected specific parameter with the preset parameter, and selectively output the smart release signal according to a result of the comparison, and the release mechanism is selectively started according to the smart release signal to release the trimmer line.

In an embodiment, the specific parameter comprises an operating current value of the string trimmer, the preset parameter comprises a preset current value, the controller compares the operating current value with the preset current value, and if the operating current value is less than the preset current value, the controller outputs the smart release signal to start the release mechanism.

In an embodiment, the specific parameter comprises a driving voltage of the string trimmer, and the controller calculates the preset current value by using the driving voltage.

In an embodiment, the smart release system comprises a detection module and a controller, the detection module comprises a Hall sensor, and the trimmer line is magnetic; and the controller outputs the smart release signal to start the release mechanism to release the trimmer line when the Hall sensor detects no magnetic signal of the trimmer line.

In an embodiment, the smart release system comprises a detection module and a controller, the detection module comprises a color recognition sensor capable of recognizing the color of the trimmer line, and the controller outputs the smart release signal to start the release mechanism to release the trimmer line when the color recognition sensor recognizes no color of the trimmer line.

In an embodiment, the release signal comprises a knock release signal, the trimmer head comprises a knock head, the knock head operably moves between a first position and a second position to start the release mechanism to release the trimmer line, the knock release signal is generated when the knock head moves between the first position and the second position, and the calculation unit calculates the usage and/or remainder of the trimmer line according to the knock release signal.

In an embodiment, the string trimmer further comprises a detection mechanism, the release signal further comprises a direct release signal sent when the detection mechanism detects that the length of the trimmer line that has extended outside a line container increases, and the calculation unit is further configured to calculate the usage and/or remainder of the trimmer line according to the direct release signal.

In an embodiment, the string trimmer further comprises a detection mechanism, the line storage device comprises a line container and a line reel accommodated in the line container, the trimmer line is wound on the line reel, the release signal further comprises a direct release signal sent when the detection mechanism detects that the line reel and the line container rotate with respect to each other, and the calculation unit is further configured to calculate the usage and/or remainder of the trimmer line according to the direct release signal.

In an embodiment, the motor is a brushless motor.

### BRIEF DESCRIPTION OF THE DRAWINGS

FIG. 1 is a sectional view of the overall structure of a string trimmer according to an embodiment of the embodiments of the present disclosure;
FIG. 2 is a schematic structural diagram of a trimmer head part of the string trimmer shown in FIG. 1;
FIG. 3 is a schematic diagram of the modules of the string trimmer shown in FIG. 1; and

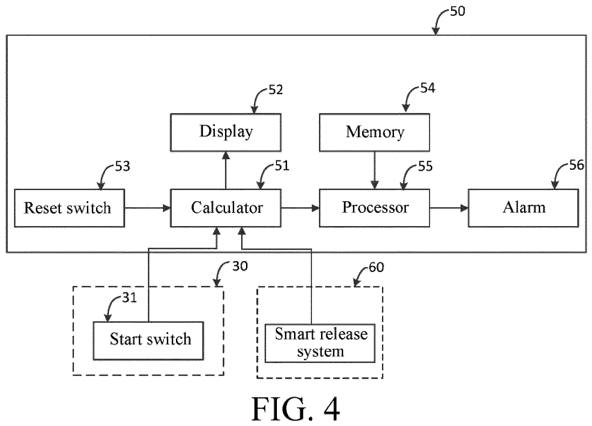

FIG. 4 is a schematic diagram of the modules of a string trimmer according to another embodiment of the embodiments of the present disclosure.

### DETAILED DESCRIPTION

For ease of understanding of the embodiments of the present disclosure, the embodiments of the present disclosure are described below more comprehensively with reference to the related accompanying drawings. However, the embodiments of the present disclosure may be implemented in various forms but are not limited to the embodiments described herein. In contrast, these embodiments are provided for more thorough and comprehensive understanding of the content disclosed in the embodiments of the present disclosure.

It should be noted that when an element is "fixed" on another element, the element may be directly fixed on the other element or an intervening element may be present. When an element is "connected" to another element, the element may be directly connected to the other element or an intervening element may be present.

Unless otherwise defined, all technical terms and scientific terms used herein have the same meaning as commonly understood by a person skilled in the art to which the embodiments of the present disclosure belong. The terms used in this specification of the embodiments of the present disclosure herein are merely used to describe specific embodiments but are not used to limit the embodiments of the present disclosure. The term "and/or" used in this specification includes any or all combinations of one or more listed items.

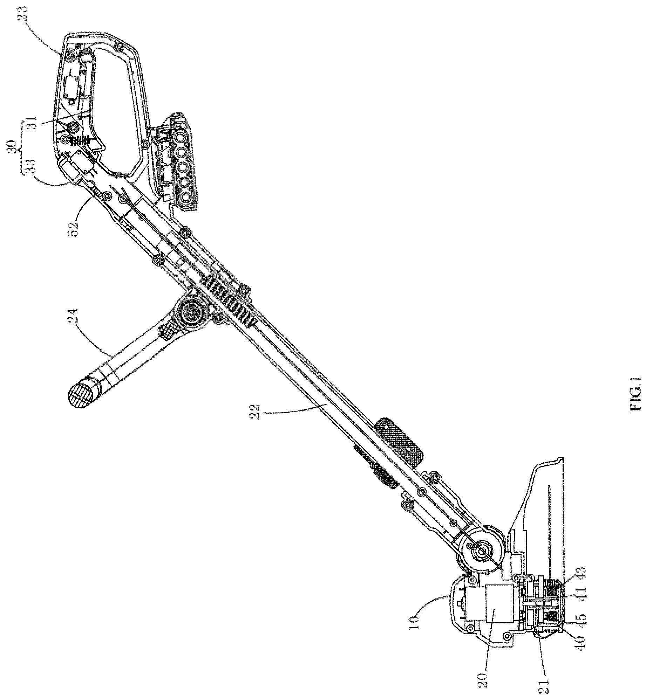

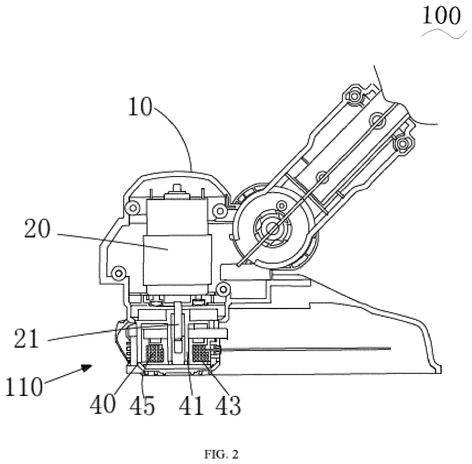

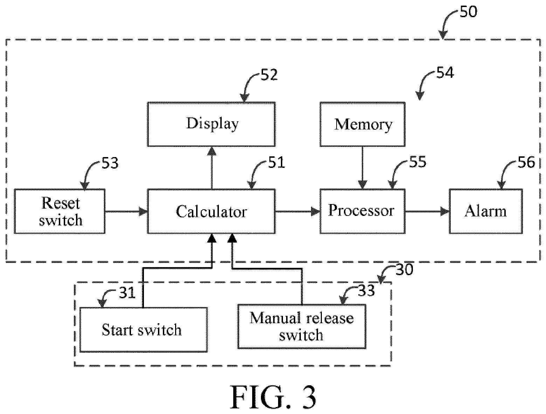

Referring to FIG. 1 and FIG. 2, in a preferred embodiment of the embodiments of the present disclosure, a string trimmer 100 includes a housing 10, a motor 20, a trimmer head 110 that is driven by the motor 20 to rotate, a calculation unit 50, a line storage device, and a trimmer line 45 accommodated in the line storage device (referring to FIG. 3). Specifically, the line storage device includes a line container 40 and a line reel 43 accommodated in the line container 40. The trimmer line 45 is wound on the line reel 43. The trimmer head 110 includes a line eyelet. The trimmer line 45 passes through the line eyelet. The motor 20 is disposed in the housing 10, has an output shaft 21, and is configured to provide a driving power. The motor enables the trimmer head 110 to rotate, to enable a length of the trimmer line 45 that has passed through the line eyelet to rotate to perform cutting work. In this embodiment, a positioning post 41, the line reel 43 that is movably sleeved over the positioning post 41, and the trimmer line 45 are disposed in the line container 40. The output shaft 21 is in transmission connection with the line container 40 through the positioning post 41. One end of the trimmer line 45 is wound on the line reel 43, and the other end of the trimmer line 45 passes through the line container 40. The string trimmer 100 further includes a release mechanism. The release mechanism can release the trimmer line 45 to increase the length of the trimmer line 45 that has passed through the line eyelet. The calculation unit 50 is configured to respond to a release signal to calculate the usage and/or remainder of the trimmer line 45. The string trimmer 100 further includes a reminder unit. The reminder unit is configured to send a reminder signal according to the usage and/or remainder of the trimmer line 45 calculated by the calculation unit 50 to remind a user.

The reminder unit includes a display 52. The display 52 is configured to display the usage and/or remainder of the trimmer line 45, to enable the user to examine the usage of the trimmer line in real time. Specifically, the display 52 may display the usage and/or remainder of the trimmer line 45 in real time. Certainly, to save energy, instead of displaying the usage and/or remainder in real time, the display may display the usage and/or remainder of the trimmer line only when the remainder of the trimmer line 45 calculated by the calculation unit 50 is less than a first preset value or the usage of the trimmer line 45 calculated by the calculation unit 50 exceeds a second preset value, to remind the user that the remainder of the trimmer line is insufficient.

Preferably, the reminder unit further includes an alarm 56. The alarm 56 sends an alarm signal when the remainder of the trimmer line 45 calculated by the calculation unit 50 is less than a first preset value or the usage of the trimmer line 45 calculated by the calculation unit 50 exceeds a second preset value, to remind the user that the remainder of the trimmer line 45 is insufficient. Certainly, the reminder unit may alternatively include only the alarm 56, and the display 52 is omitted. Preferably, the value range of the first preset value is 5% to 15% of the initial sum of the trimmer line 45, or the first preset value is a quantity of 25 times to 50 times that the release mechanism can release the trimmer line. The value range of the second preset value is 85% to 95% of the initial sum of the trimmer line 45. With such a setting, the user can know in advance that the trimmer line is insufficient without affecting a next time of work, and prepare a spare trimmer line in advance. Each time of trimming work by the user generally lasts 30 min, during which the trimmer line is released about 25 times. To be specific, to keep a next time of trimming work from being affected, it is necessary to remind the user that the remainder is insufficient before the next time of trimming work. With such a setting, it can be ensured that a current time of trimming work is not affected.

In another embodiment, the reminder unit further includes a wireless transmission module. The wireless transmission module transmits the usage and/or remainder of the trimmer line 45 calculated by the calculation unit 50 to a mobile phone client of the user, and reminds the user to purchase a trimmer line in time. Specifically, the wireless transmission module transmits the usage and/or remainder of the trimmer line 45 after a last time of use to the mobile phone client of the user. The user may check the mobile phone client to examine the usage and/or remainder of the trimmer line before using the string trimmer a next time to work, so that the user may prepare and purchase a trimmer line and a line reel in advance. Preferably, data transmitted by the wireless transmission module to the mobile phone client of the user further includes a web address for purchasing the trimmer line or a nearby shop where a trimmer line is available.

In this embodiment, the string trimmer 100 further includes an extension rod 22. The line container 40 is disposed at one end of the extension rod 22, and is disposed in the trimmer head 110. When rotating, the trimmer head 110 enables the line container 40 to rotate together. Certainly, the line container 40 may be disposed outside the trimmer head 110. The line reel 43 is accommodated in the line container 40. The trimmer line is guided from the line container 40, and passes through the line eyelet on the trimmer head 110. The housing 10 further includes a handle disposed at the other end of the extension rod 20. Specifically, the handle includes a main handle 23 and an assist handle 24. With such a setting, an operator can use the main handle 23 and the assist handle 24 to more reliably lift and operate the string trimmer to work.

In this embodiment, the release mechanism can enable, according to the release signal, the line reel 43 and the line container 40 to rotate with respect to each other to release the trimmer line 45, to increase the length of the trimmer line 45 that has passed through the line eyelet. Specifically, the release mechanism responds to each release signal to start to release the trimmer line 45. When the release mechanism receives one release signal, the release mechanism is started once, and the length of the trimmer line 45 that has passed through the line eyelet is increased by once. The calculation unit calculates the usage and/or remainder of the trimmer line according to a quantity of times of the release signal. It may be understood that the usage and/or remainder of the trimmer line may be the quantity of times that the string trimmer has released the trimmer line and/or the remaining quantity of times that the string trimmer can release the trimmer line, and certainly, may alternatively be the used length and/or remaining length of the trimmer line. To be specific, for a specific string trimmer, each time when being started, the release mechanism releases basically the same length of the trimmer line. When the trimmer line has a fixed initial total length, the quantity of times that the trimmer line can be released can be calculated according to the initial total length of the trimmer line and the length of the trimmer line released each time. Certainly, the initial trimmer line may be converted into a total quantity of times that the trimmer line can be released. The calculation unit 50 is configured to count the release signal each time to calculate the used quantity of times and/or the remaining quantity of times of the trimmer line. The calculation unit may alternatively calculate the total length of the released trimmer line according to a quantity of times of the release signal, so as to calculate the used length and/or remaining length of the trimmer line.

Referring to FIG. 2 and FIG. 3, in an embodiment, the string trimmer 100 includes a control switch 30 disposed on the housing 10. The control switch 30 is configured to generate the release signal according to an operation of the user. The control switch 30 includes a start switch 31. The release signal includes a start signal. The start switch 31 is configured to generate the start signal according to an operation of the user. The release mechanism releases the trimmer line 45 according to the start signal. The calculation unit 50 is configured to calculate the usage and/or remainder of the trimmer line 45 according to the start signal. To be specific, during the use of the string trimmer 100, after the user presses the start switch 31, the motor 20 starts to work after the start switch 31 generates the start signal, and at the same time, the trimmer line 45 is automatically released from the line container 40, so that the trimmer line is released once. In this case, the calculation unit 50 correspondingly calculates the usage and/or remainder of the trimmer line 45 once according to the start signal.

In another embodiment, to release the trimmer line without interrupting normal work of the string trimmer, the control switch 30 further includes a manual release switch 33. Correspondingly, the release signal includes a manual release signal. The manual release switch 33 is configured to generate the manual release signal according to an operation of the user. The release mechanism releases the trimmer line 45 according to the manual release signal. In this way, the user may control as required whether to release the trimmer line during normal trimming, so that the trimmer line is released reliably.

In this embodiment, the release mechanism includes at least one release electrical switch and a control apparatus. The release electrical switch selectively starts the control apparatus according to an operation signal of the manual release switch 33 to enable the line reel 43 to be in a second state in which a rotational speed difference can exist between the line reel 43 and the line container 40, so as to release the trimmer line. Specifically, the control apparatus includes a motor 20. In another embodiment, the control apparatus may alternatively include another drive apparatus, for example, an electric magnet or a secondary motor independent of the motor 20. Any drive apparatus shall fall within the protection scope of the embodiments of the present disclosure provided that the drive apparatus can enable the line reel 43 to be in the second state in which the rotational speed difference exists between the line reel 43 and the line container 40.

In this example, the control apparatus further includes a control circuit electrically connected to the motor 20. The control circuit is configured to control the rotational speed to change during the operation of the motor 20, to enable the motor 20 to be switched between a release speed and an operating speed, so as to release the trimmer line. A brake switch circuit is preferably used in the control circuit. A single-pole double-throw switch is preferably used as the release electrical switch. The manual release switch 33 is turned on, the release electrical switch is closed, the motor 20 is short circuited, the rotational speed of the motor 20 instantly decreases to zero, the line reel 43 rotates with respect to the line container 40, the trimmer line is released, the manual release switch 33 is released, and the motor is restored to the operating speed. The line reel 43 and the line container 40 return to a first state of being still with respect to each other. In another embodiment, the release electrical switch may be a MOSFET switch. The manual release switch 33 operably generates the manual release signal. The string trimmer further includes a controller. The controller controls, according to the manual release signal, the MOSFET switch to be closed or opened to short circuit the motor, and the rotational speed difference is produced between the line reel 43 and the line container 40 to release the trimmer line.

The release electrical switch is not limited to the foregoing form. The release electrical switch may be a mechanical switch or an electronic switch. Any other electronic component structure that can open and close a circuit under an electronic signal or mechanical control shall fall within the embodiments of the present disclosure.

For the foregoing two specific implementations, there are the following two release manners and corresponding calculation forms.

In the first implementation, during use, after the start switch 31 is turned on, the start switch 31 generates a start signal that is the same as that in the foregoing embodiment. The release signal includes the start signal. The motor 20 is started. The release mechanism releases the trimmer line 45 according to the start signal. The calculation unit 50 calculates the usage and/or remainder of the trimmer line 45 once according to the start signal.

If the length of the trimmer line 45 is not satisfactory and it is necessary to release the trimmer line again after the string trimmer is started, the user only needs to trigger the manual release switch 33 to short circuit the motor 20 and reduce the speed of the motor 20 to zero. A speed difference is produced between the line reel 43 and the line container 40, and the trimmer line 45 is further released on the original basis. The rotational speed of the motor 20 is restored when the manual release switch 33 is released or after a specified time, and the line reel 43 and the line container 40 rotate synchronously again. Because in the operation, the trimmer line is released during normal work, that is, the trimmer line can be released by choosing to turn on the manual release switch 33 without interrupting cutting work, operations are convenient, and the entire string trimmer 100 does not need to be restarted, so that it takes the user a much shorter time to release the trimmer line again.

In this case, the calculation unit 50 calculates the usage and/or remainder of the trimmer line 45 again according to the manual release signal. To be specific, in an entire process, the trimmer line 45 is released twice, and correspondingly the calculation unit 50 calculates the usage and/or remainder twice.

In the second implementation, during use, after the start switch 31 is turned on, the start switch 31 generates only the start signal. The line container 40 does not respond to an operation on the start switch 31, the trimmer line 45 is not released, and correspondingly the calculation unit 50 does not calculate the usage and/or remainder of the trimmer line 45. When the user turns on the manual release switch 33 during use, the trimmer line 45 is manually released, and the calculation unit 50 alternatively correspondingly calculates the usage and/or remainder of the trimmer line 45 once according to the manual release signal. With such a setting, it is avoided to release the trimmer line each time when the start switch 31 is operated to switch on and off the string trimmer, thereby avoiding a waste of the trimmer line.

With the foregoing setting, it is ensured that the calculation unit 50 accurately calculates the usage and/or remainder of the trimmer line 45, so that the user conveniently and accurately examines the current specific usage of the trimmer line 45.

In this specific embodiment, the motor 20 is disposed in the front in the housing 10, and the control switch 30 is electrically connected to the motor 20, so that a press operation of the user is used to control the motor 20 to start or stop, and the release signal can be generated at the same time according to an operation of the user. It may be understood that in some other embodiments, the motor 20 may alternatively be disposed in the rear in the housing 10, and the control switch 30 is only configured to generate the release signal, and correspondingly an additional switch may be disposed and operated to control the motor 20 to start and stop. This is not limited herein.

In another embodiment, the release mechanism includes a smart release mechanism configured to control the trimmer line 45 to automatically release the trimmer line. When the length of the trimmer line 45 that has passed through the line eyelet decreases with wear in a work process of the string trimmer 100, the smart release mechanism detects a centrifugal force change after the trimmer line becomes shorter with wear, starts to automatically release the trimmer line, and generates a smart release signal. Specifically, the smart release mechanism includes a release device disposed in the trimmer head 110. When the trimmer head 110 is driven to rotate, the release device generates a centrifugal force that counteracts the centrifugal force of the trimmer line during rotation. Therefore, when the length by which the trimmer line decreases with wear decreases, the centrifugal force of the release device is greater than the centrifugal force of the trimmer line, the release device is actuated, the smart release mechanism is started, the trimmer line is released, and the smart release signal is generated. More specifically, the smart release signal is triggered by an action of the release device. In this embodiment, a proximity switch is disposed on the release device. When the release device moves from a first position to a second position, the proximity switch is closed, and the smart release signal is sent. Certainly, instead of using the proximity switch, the smart release signal may be alternatively sent in another manner. For example, a trigger member is disposed on the release device, and a Hall sensor is disposed on the line container. When the release device moves from the first position to the second position, the Hall sensor is triggered, and the smart release signal is sent. The calculation unit calculates the usage and/or remainder of the trimmer line 45 once according to the smart release signal.

In another embodiment, the control switch 30 includes only the start switch 31. The start switch 31 is configured to generate the start signal according to an operation of the user to start the string trimmer 100. The start switch 31 is configured to generate the start signal according to an operation of the user. The release signal includes the start signal. The release mechanism releases the trimmer line 45 according to the start signal. The calculation unit 50 is configured to calculate the usage and/or remainder of the trimmer line 45 according to the start signal. The release signal further includes a smart release signal. Correspondingly, a smart release system 60 configured to control the trimmer line 45 to perform a start operation is disposed in the string trimmer 100. The smart release system 60 compares a specific parameter representing a current length of the trimmer line 45 with a preset parameter, and generates the smart release signal according to a result of the comparison, to perform start control. In this case, the calculation unit 50 is configured to directly calculate the usage and/or remainder of the trimmer line 45 according to the smart release signal. The calculation unit 50 is further configured to directly calculate the usage and/or remainder of the trimmer line 45 according to the start signal. It may be understood that the release signal may alternatively include only the smart release signal. The start switch 31 only generates the start signal. The release mechanism does not respond to the start signal. The calculation unit 50 does not calculate the usage and/or remainder of the trimmer line 45 according to the start signal. The calculation unit 50 is only configured to directly calculate the usage and/or remainder of the trimmer line 45 according to the smart release signal.

Specifically, the smart release system 60 includes a detection module and a controller that stores the preset parameter. The detection module is configured to detect the specific parameter that represents the length of the trimmer line 45. The controller is configured to: compare the detected specific parameter with the preset parameter, and output the smart release signal according to a result of the comparison, to selectively start the smart release system 60 and release the trimmer line 45.

In an embodiment, the specific parameter detected by the detection module includes an operating current value of the string trimmer. In the same operating condition, to be specific, if a driving voltage is kept unchanged, the operating current value is larger when the load is higher. Specifically, if the string trimmer has idle load, if the trimming length is larger, the operating current value of the string trimmer is larger. When the trimming length decreases with wear, the operating current of the string trimmer becomes smaller. That is, an operating current value used to wear a specified length of the trimmer line is calculated and used as a preset current value (that is, the preset parameter), and the operating current value detected during normal work is compared with the preset current value. If the operating current value detected in real time is less than the preset current value, it may be determined that the length by which the trimmer line decreases with wear reaches or exceeds the specified length. In this case, the controller outputs the smart release signal, and controls the trimmer line 45 to be automatically released from the line container 40, that is, the trimmer line is released once. Preferably, an operating current that is measured when the string trimmer has an idle load and used to wear the specified length of the trimmer line is used as the preset current value.

Specifically, the detection module detects the driving voltage (that is, a voltage output between two ends of a battery pack in the string trimmer 100 or a voltage between two ends of the motor 20) of the string trimmer 100, and calculates the preset current value by using the driving voltage. The detection module detects the driving voltage in a real-time sampling manner, or in a periodic, intermittent or another detection manner. This is not limited herein. In addition, because the characteristics of a lithium battery in the battery pack determine that the input voltage does not have a fixed value, and the voltage gradually decreases as the discharging time increases. Therefore, at the same load, when the trimmer line has a fixed length, different operating currents are required at different driving voltages. That is, the preset current value changes as the driving voltage changes. Specifically, there is a one-to-one correspondence between preset current values and driving voltages. That is, one driving voltage corresponds to only one preset current value.

The controller stores in advance a change relationship between a driving voltage and an operating current used to wear the specified length of the trimmer line. The controller first uses the driving voltage detected by the detection module to calculate the preset current value, and then compares the operating current value detected in real time with the preset current value. If the operating current value detected in real time is less than the preset current value, it may be determined that the length by which the trimmer line decreases with wear reaches or exceeds the specified length. In this case, the controller outputs the smart release signal, and controls the trimmer line 45 to be automatically released from the line container 40, that is, releases the trimmer line once. In another embodiment, the detection module does not detect a voltage, but instead, a voltage stabilizing module is disposed on an output power supply, so that the voltage at two ends of the motor 20 or the battery pack is stabilized at a determined value. A stable voltage is used to calculate the preset current value, and the operating current value detected during normal work is compared with the preset current value. If the detected current value is less than the preset current value, the controller outputs the smart release signal to start to release the trimmer line. The embodiments of the present disclosure further provide an optional implementation solution. The detection module includes a Hall sensor, and the trimmer line is magnetic. When the trimmer line passes through a detection range of the Hall sensor, the Hall sensor detects the magnetism of the trimmer line. When the length by which the trimmer line decreases with wear reaches or exceeds the specified length, the Hall sensor detects no magnetic signal of the trimmer line, and the controller outputs the smart release signal to start to release the trimmer line.

The embodiments of the present disclosure further provide an optional implementation solution. The detection module includes a color recognition sensor. The color recognition sensor can recognize the color of the trimmer line. When the length by which the trimmer line decreases with wear reaches or exceeds the specified length, the color recognition sensor recognizes no color of the trimmer line. The controller outputs the smart release signal to start to release the trimmer line according to the signal of the color recognition sensor. In the smart release system, after the controller outputs the smart release signal to start a release operation, the embodiments of the present disclosure further provide an optional implementation solution. The string trimmer 100 further includes a line cutting blade disposed on the housing 10. The line cutting blade is configured to cut the trimmer line 45 when the release length of the trimmer line 45 exceeds a target length, so that the trimming length of the trimmer line 45 is maintained in a relatively safe and appropriate range. The detection module includes a vibration sensor. Preferably, the vibration sensor is disposed at the line cutting blade.

When the release length of the trimmer line 45 exceeds the target length, a free end of the trimmer line 45 touches the line cutting blade and is cut. The vibration sensor outputs a release stop signal when detecting that the free end of the trimmer line 45 is cut. The controller recognizes the release stop signal and stops releasing the trimmer line. In another embodiment, the vibration sensor may be disposed at the housing 10. Any position of the vibration sensor shall fall within the protection scope of the embodiments of the present disclosure provided that the vibration sensor arranged at the position can detect vibration.

In another embodiment, the release signal includes a knock release signal. The trimmer head 110 includes a knock head. The knock head operably moves between the first position and the second position to enable the release mechanism to start to release the trimmer line 45. The knock release signal is generated when the knock head moves between the first position and the second position. The calculation unit calculates the usage and/or remainder of the trimmer line according to the knock release signal. Specifically, a trigger member is disposed on the knock head. A reset spring is disposed between the knock head and the line container. When the spring is in a free state, the knock head is located at the first position. The knock head hits the ground, and the knock head overcomes an elastic force of the spring and moves to the second position. A proximity switch is disposed on the line container of the trimmer head. When the knock head moves from the first position to the second position, the proximity switch is closed to generate the knock release signal. When the knock head returns from the second position to the first position under the elasticity of the spring, the release mechanism releases the trimmer line once, and the proximity switch is closed once to generate the knock release signal once. It may be understood that the knock release signal may be not limited to being generated by using the proximity switch, and may be generated by using a magnetic signal or a pressure signal.

In another implementation, the release signal may be in another form. For example, a detection mechanism that detects whether the length of the trimmer line that has extended out of the line container increases is directly disposed on the line container. The detection mechanism sends a direct release signal each time when detecting that the length of the trimmer line that has extended out of the line container increases. The calculation unit 50 calculates the usage and/or remainder of the trimmer line 45 according to the direct release signal detected by the detection mechanism. Preferably, to prevent the length of the trimmer line that has extended out of the line container from increasing due to a loose coil to cause incorrect calculation of the calculation unit 50. The detection mechanism sends the direct release signal when the detected length of the trimmer line that has extended out of the line container increases to exceed the specified length. In this way, the calculation unit 50 is protected from being affected by pseudo-release, thereby ensuring the reliability of the calculation unit.

In another implementation, the detection mechanism may detect whether the line reel 43 and the line container 40 rotate with respect to each other. The detection mechanism sends a direct release signal when detecting that the line reel 43 and the line container 40 rotate with respect to each other. The calculation unit 50 calculates the usage and/or remainder of the trimmer line 45 according to the direct release signal detected by the detection mechanism. That is, the release signal is not limited to the specific forms in the foregoing embodiments. Any signal shall fall within the protection scope of the embodiments of the present disclosure provided that it may be obtained indirectly or directly from the signal whether the trimmer line is released.

The calculation unit 50 includes a calculator 51 and a reset switch 53. In this embodiment, the calculator 51 is connected to the control switch 30, to calculate the usage of the trimmer line 45 and display the usage by using the display 52. The reset switch 53 is configured to reset the calculator 51. In this specific embodiment, when a roll of the trimmer line 45 is used up and is replaced with a new roll of the trimmer line 45, the user may use the reset switch 53 to reset the amount of the calculator 51 to recalculate the usage of the new roll of trimmer line 45. Certainly, the reset switch 53 may be automatically reset without an operation of the user. The reset switch 53 is disposed on the line container. When the new roll of the trimmer line 45 is loaded in the line container 40, the reset switch is triggered to automatically reset the amount. In this way, the reset does not require a manual operation and is smarter.

Further, the calculation unit 50 includes a memory 54 and a processor 55. The memory 54 is configured to store the usable initial sum of the trimmer line 45 used by the string trimmer 100, that is, a default usable sum of each roll of unused trimmer line 45. Because line containers 40 in different models of string trimmers 100 have different storage spaces, correspondingly different models of trimmer lines 45 are used. Different models of trimmer lines 45 have different total line lengths, and the trimmer lines 45 have different single release length values during trimming work. In this case, different models of trimmer lines 45 in different models of string trimmers 100 have different usable initial sums. Therefore, the usable initial sums of trimmer lines 45 stored in the memory 54 may be stored in advance on delivery.

The processor 55 is configured to: acquire and calculate a difference between the usable sum and the usage of the trimmer line 45, and generate a prompt signal when the difference is less than or equal to a preset value. The alarm 56 is configured to send an alarm prompt according to the prompt signal, indicating that the existing trimmer line 45 in the string trimmer 100 is about to be used up, to remind the operator to change the trimmer line 45 in time. The alarm prompt sent by the alarm 56 may be a prompt sound (for example, a beep), an indicator lamp, among other manners. This is not limited herein.

In another embodiment, the reset switch 53 is configured to reset the current usable amount of the trimmer line 45 in the calculator 51. The calculator 51 is configured to calculate the remainder of the trimmer line 45 according to the release signal of the control switch 30 after the amount is reset. Specifically, the calculator 51 subtracts 1 from the usable initial sum of the trimmer line 45 each time when the control switch 30 is pressed, so as to calculate the remainder of the trimmer line 45.

Correspondingly, the processor 55 is configured to: acquire the remainder of the trimmer line 45, and generate a prompt signal when the remainder of the trimmer line 45 is less than or equal to the first preset value. The alarm 56 is configured to send an alarm prompt according to the prompt signal, indicating that the existing trimmer line 45 in the string trimmer 100 is about to be used up, to remind the operator to change the trimmer line 45 in time. The alarm prompt sent by the alarm 56 may be a prompt sound (for example, a beep), an indicator lamp, among other manners. This is not limited herein.

In addition, the calculator 51 is a mechanical calculator or an electronic calculator. When the calculator 51 is a mechanical calculator, the calculator 51 includes a toggle switch (not shown) linked to the control switch 30. The toggle switch is turned on accordingly after the control switch 30 is pressed, and the usage and remainder of the trimmer line 45 are correspondingly increased and decreased respectively. Specifically, the calculation unit 50 includes a toggle switch linked to the start switch 31. The toggle switch is turned on accordingly after the start switch 31 is pressed, and the calculator 51 correspondingly increases and decreases the usage and remainder of the trimmer line respectively according to a start signal of the toggle switch. When the manual release switch 33 is used, the toggle switch is linked to the manual release switch 33 and/or the start switch. The toggle switch is turned on accordingly after the manual release switch 33 and/or the start switch is pressed, and the calculator 51 correspondingly increases and decreases the usage and remainder of the trimmer line 45 respectively according to a start signal of the toggle switch. When the calculator 51 is an electronic calculator, the calculator 51 is configured to receive the start signal of the control switch 30, and correspondingly increases and decreases the usage and remainder of the trimmer line 45 respectively.

In this embodiment, the display 52 is disposed on the housing 10 of the string trimmer, for example, is disposed on the main handle 23 or a nearby position, and certainly may be disposed on the assist handle. This embodiment is not limited to the foregoing positions, provided that the display arranged at a position can be conveniently seen by the operator.

In this embodiment, the motor 20 is preferably a brushless motor. Because the brushless motor has a control board, the release signal may be directly acquired or counted by using the control board without separately arranging the calculation unit or the detection mechanism, so that the overall costs can be reduced.

In the embodiments of the present disclosure, the calculation unit configured to calculate the usage and/or remainder of the trimmer line 45 is disposed in the string trimmer 100. In this way, when currently the usable amount of the trimmer line 45 in the string trimmer 100 is relatively small, the user can be reminded to change the trimmer line 45 in time, thereby reducing the waste of time and labor during use because the trimmer line 45 is used up.

The foregoing embodiments only describe several implementations of the embodiments of the present disclosure, and their description is specific and detailed, but cannot therefore be understood as a limitation to the patent scope of the embodiments of the present disclosure. It should be noted that a person of ordinary skill in the art may further make variations and improvements without departing from the scope of the present invention as defined by the appended claims.

## Claims

1. A string trimmer (100), comprising:
a housing (10);
a line storage device, configured to accommodate a trimmer line (45);
a trimmer head (110), having a line eyelet, and the trimmer line (45) passing through the line eyelet;
a motor (20), configured to drive the trimmer head (110) to rotate, to enable a length of the trimmer line (45) that has passed through the line eyelet to perform cutting work; and
a release mechanism, capable of releasing the trimmer line (45), to increase the length of the trimmer line (45) that has passed through the line eyelet; **characterized by** a calculation unit (50), configured to respond to a release signal to calculate the usage and/or remainder of the trimmer line (45); and
a reminder unit, configured to send a reminder signal according to the usage and/or remainder of the trimmer line (45) calculated by the calculation unit (50) to remind a user.

2. The string trimmer (100) according to claim 1, wherein the reminder unit comprises a display (52), and the display (52) is configured to display the usage and/or remainder of the trimmer line (45).

3. The string trimmer (100) according to claim 2, wherein the reminder unit comprises a display (52), and the display (52) outputs a display result when the remainder of the trimmer line (45) calculated by the calculation unit (50) is less than a first preset value or the usage of the trimmer line (45) calculated by the calculation unit (50) exceeds a second preset value, to remind the user that the remainder of the trimmer line (45) is insufficient.

4. The string trimmer (100) according to claim 1 or 2, wherein the reminder unit comprises an alarm (56), and the alarm (56) sends an alarm signal when the remainder of the trimmer line (45) calculated by the calculation unit (50) is less than a first preset value or the usage of the trimmer line (45) calculated by the calculation unit (50) exceeds a second preset value, to remind the user that the remainder of the trimmer line (45) is insufficient.

5. The string trimmer (100) according to claim 4, wherein the value range of the first preset value is 5% to 15% of the initial sum of the trimmer line (45), or the first preset value is a quantity of 25 times to 50 times that the release mechanism can release the trimmer line (45).

6. The string trimmer (100) according to claim 4, wherein the value range of the second preset value is 85% to 95% of the initial sum of the trimmer line (45).

7. The string trimmer (100) according to claim 4, wherein the reminder unit further comprises a wireless transmission module, and the wireless transmission module is configured to transmit the usage and/or remainder of the trimmer line (45) calculated by the calculation unit (50) a last time to a mobile phone client of the user.

8. The string trimmer (100) according to claim 1, wherein the calculation unit (50) comprises a calculator (51) and a reset switch (53), the calculator (51) may calculate the usage of the trimmer line (45) according to the release signal, and the reset switch (53) is configured to reset the calculator (51).

9. The string trimmer (100) according to claim 8, wherein the calculation unit (50) further comprises a memory (54) and a processor (55), the memory (54) is configured to store the usable initial sum of the trimmer line (45), the processor (55) is configured to acquire the initial sum and calculate a difference between the initial sum and the usage of the trimmer line (45), and send a prompt signal when the difference is less than or equal to a preset value, and the reminder unit is configured to send the reminder signal according to the prompt signal.

10. The string trimmer (100) according to claim 1, wherein the calculation unit (50) comprises a calculator (51) and a reset switch (53), the calculator (51) is configured to calculate the remainder of the trimmer line (45) according to the release signal, and the reset switch (53) is configured to reset the remainder of the trimmer line (45) in the calculator (51).

11. The string trimmer (100) according to claim 10, wherein the calculation unit (50) comprises a memory (54) and a processor (55), the memory (54) is configured to store the usable initial sum of the trimmer line (45), the processor (55) is configured to: acquire the remainder of the trimmer line (45), and generate a prompt signal when the remainder of the trimmer line (45) is less than or equal to a preset value, and the reminder unit is configured to send the reminder signal according to the prompt signal.

12. The string trimmer (100) according to claim 1, wherein the release mechanism responds to each release signal to start to release the trimmer line (45), when the release mechanism receives one release signal, the release mechanism is started once, and the length of the trimmer line (45) that has passed through the line eyelet is increased by once, and the calculation unit (50) calculates the usage and/or remainder of the trimmer line (45) according to a quantity of times of the release signal.

13. The string trimmer (100) according to claim 12, wherein the string trimmer (100) further comprises a manual release switch, and the release signal comprises a manual release signal; and the manual release switch generates the manual release signal according to an operation of the user, the release mechanism releases the trimmer line (45) according to the manual release signal, and the calculation unit (50) is configured to calculate the usage and/or remainder of the trimmer line (45) according to the manual release signal.

14. The string trimmer (100) according to claim 12, wherein the release signal comprises a smart release signal; and a smart release system configured to control the trimmer line (45) to automatically release the trimmer line (45) is disposed in the string trimmer (100), and the smart release system compares a specific parameter representing a current length of the trimmer line (45) with a preset parameter, and generates the smart release signal according to a result of the comparison.

15. The string trimmer (100) according to claim 12, wherein the release signal comprises a knock release signal, the trimmer head (110) comprises a knock head, the knock head operably moves between a first position and a second position to start the release mechanism to release the trimmer line (45), the knock release signal is generated when the knock head moves between the first position and the second position, and the calculation unit (50) calculates the usage and/or remainder of the trimmer line (45) according to the knock release signal.

## Patentansprüche

1. Rasentrimmer (100), der Folgendes umfasst:
ein Gehäuse (10);
eine Fadenlagervorrichtung, die konfiguriert ist, um einen Trimmerfaden (45) aufzunehmen;
einen Trimmerkopf (110), der eine Fadenöse aufweist, und wobei der Trimmerfaden (45) durch die Fadenöse durchtritt;
einen Motor (20), der konfiguriert ist, um den Trimmerkopf (110) anzutreiben, um sich zu drehen, um es einer Länge des Trimmerfadens (45), der durch die Fadenöse durchgetreten ist, zu ermöglichen, eine Schneidarbeit durchzuführen; und
einen Freigabemechanismus, der zum Freigeben des Trimmerfadens (45) in der Lage ist, um die Länge des Trimmerfadens (45), der durch die Fadenöse durchgetreten ist, zu steigern; **gekennzeichnet durch**
eine Berechnungseinheit (50), die konfiguriert ist, um auf ein Freigabesignal zu reagieren, um den Verbrauch und/oder den Rest des Trimmerfadens (45) zu berechnen; und
eine Erinnerungseinheit, die konfiguriert ist, um ein Erinnerungssignal gemäß dem Verbrauch und/oder dem Rest des Trimmerfadens (45), der durch die Berechnungseinheit (50) berechnet wird, zu senden, um einen Benutzer zu erinnern.

2. Rasentrimmer (100) nach Anspruch 1, wobei die Erinnerungseinheit eine Anzeige (52) umfasst und die Anzeige (52) konfiguriert ist, um den Verbrauch und/oder den Rest des Trimmerfadens (45) anzuzeigen.

3. Rasentrimmer (100) nach Anspruch 2, wobei die Erinnerungseinheit eine Anzeige (52) umfasst und die Anzeige (52) ein Anzeigeergebnis ausgibt, wenn der Rest des Trimmerfadens (45), der durch die Berechnungseinheit (50) berechnet wird, kleiner als ein erster voreingestellter Wert ist oder der Verbrauch des Trimmerfadens (45), der durch die Berechnungseinheit (50) berechnet wird, einen zweiten voreingestellten Wert überschreitet, um den Benutzer daran zu erinnern, dass der Rest des Trimmerfadens (45) unzureichend ist.

4. Rasentrimmer (100) nach Anspruch 1 oder 2, wobei die Erinnerungseinheit einen Alarm (56) umfasst und der Alarm (56) ein Alarmsignal sendet, wenn der Rest des Trimmerfadens (45), der durch die Berechnungseinheit (50) berechnet wird, kleiner als ein erster voreingestellter Wert ist oder der Verbrauch des Trimmerfadens (45), der durch die Berechnungseinheit (50) berechnet wird, einen zweiten voreingestellten Wert überschreitet, um den Benutzer daran zu erinnern, dass der Rest des Trimmerfadens (45) unzureichend ist.

5. Rasentrimmer (100) nach Anspruch 4, wobei der Wertebereich des ersten voreingestellten Werts 5 % bis 15 % der Anfangssumme des Trimmerfadens (45) ist oder der erste voreingestellte Wert eine Menge von 25 Malen bis 50 Malen, dass der Auslösemechanismus den Trimmerfaden (45) freigeben kann, ist.

6. Rasentrimmer (100) nach Anspruch 4, wobei der Wertebereich des zweiten voreingestellten Werts 85 % bis 95 % der Anfangssumme des Trimmerfadens (45) ist.

7. Rasentrimmer (100) nach Anspruch 4, wobei die Erinnerungseinheit ferner ein drahtloses Übertragungsmodul umfasst und das drahtlose Übertragungsmodul konfiguriert ist, um den Verbrauch und/oder den Rest des Trimmerfadens (45), der durch die Berechnungseinheit (50) ein letztes Mal berechnet wird, an einen Mobiltelefon-Client des Benutzers zu übertragen.

8. Rasentrimmer (100) nach Anspruch 1, wobei die Berechnungseinheit (50) einen Berechner (51) und einen Rücksetzschalter (53) umfasst, der Berechner (51) den Verbrauch des Trimmerfadens (45) gemäß dem Freigabesignal berechnen kann und der Rücksetzschalter (53) konfiguriert ist, um den Berechner (51) zurückzusetzen.

9. Rasentrimmer (100) nach Anspruch 8, wobei die Berechnungseinheit (50) ferner ein Memory (54) und einen Prozessor (55) umfasst, das Memory (54) konfiguriert ist, um die verbrauchbare Anfangssumme des Trimmerfadens (45) zu speichern, der Prozessor (55) konfiguriert ist, um die Anfangssumme zu erfassen und eine Differenz zwischen der Anfangssumme und dem Verbrauch des Trimmerfadens (45) zu berechnen und ein Aufforderungssignal zu senden, wenn die Differenz kleiner als oder gleich einem voreingestellten Wert ist, und die Erinnerungseinheit konfiguriert ist, um das Erinnerungssignal gemäß dem Aufforderungssignal zu senden.

10. Rasentrimmer (100) nach Anspruch 1, wobei die Berechnungseinheit (50) einen Berechner (51) und einen Rücksetzschalter (53) umfasst, der Berechner (51) konfiguriert ist, um den Rest des Trimmerfadens (45) gemäß dem Freigabesignal zu berechnen, und der Rücksetzschalter (53) konfiguriert ist, um den Rest des Trimmerfadens (45) in dem Berechner (51) zurückzusetzen.

11. Rasentrimmer (100) nach Anspruch 10, wobei die Berechnungseinheit (50) ein Memory (54) und einen Prozessor (55) umfasst, das Memory (54) konfiguriert ist, um die verbrauchbare Anfangssumme des Trimmerfadens (45) zu speichern, der Prozessor (55) für Folgendes konfiguriert ist: Erfassen des Rests des Trimmerfadens (45) und Erzeugen eines Aufforderungssignals, wenn der Rest des Trimmerfadens (45) kleiner als oder gleich einem voreingestellten Wert ist, und die Erinnerungseinheit konfiguriert ist, um das Erinnerungssignal gemäß dem Aufforderungssignal zu senden.

12. Rasentrimmer (100) nach Anspruch 1, wobei der Freigabemechanismus auf jedes Freigabesignal reagiert, um anzufangen, den Trimmerfaden (45) freizugeben, wenn der Freigabemechanismus ein Freigabesignal empfängt, der Freigabemechanismus einmal gestartet wird und die Länge des Trimmerfadens (45), der durch die Fadenöse durchgetreten ist, um eins gesteigert wird und die Berechnungseinheit (50) den Verbrauch und/oder den Rest des Trimmerfadens (45) gemäß einer Menge von Malen des Auslösesignals berechnet.

13. Rasentrimmer (100) nach Anspruch 12, wobei der Rasentrimmer (100) ferner einen manuellen Freigabeschalter umfasst und das Freigabesignal ein manuelles Freigabesignal umfasst; und der manuelle Freigabeschalter das manuelle Freigabesignal gemäß einer Betätigung des Benutzers erzeugt, der Freigabemechanismus den Trimmerfaden (45) gemäß dem manuellen Freigabesignal freigibt und die Berechnungseinheit (50) konfiguriert ist, um den Verbrauch und/oder den Rest des Trimmerfadens (45) gemäß dem manuellen Auslösesignal zu berechnen.

14. Rasentrimmer (100) nach Anspruch 12, wobei das Freigabesignal ein intelligentes Freigabesignal umfasst; und ein intelligentes Freigabesystem, das konfiguriert ist, um den Trimmerfaden (45) zu steuern, um den Trimmerfaden (45) automatisch freizugeben, in dem Rasentrimmer (100) angeordnet ist und das intelligente Freigabesystem einen spezifischen Parameter, der eine aktuelle Länge des Trimmerfadens (45) darstellt, mit einem voreingestellten Parameter vergleicht und das intelligente Freigabesignal gemäß einem Ergebnis des Vergleichs erzeugt.

15. Rasentrimmer (100) nach Anspruch 12, wobei das Freigabesignal ein Tippfreigabesignal umfasst, der Trimmerkopf (110) einen Tippkopf umfasst, sich der Tippkopf zwischen einer ersten Position und einer zweiten Position wirkbewegt, um den Freigabemechanismus zu starten, um den Trimmerfaden (45) freizugeben, das Tippfreigabesignal erzeugt wird, wenn sich der Tippkopf zwischen der ersten Position und der zweiten Position bewegt, und die Berechnungseinheit (50) den Verbrauch und/oder den Rest des Trimmerfadens (45) gemäß dem Tippfreigabesignal berechnet.

## Revendications

1. Coupe-bordures (100), comprenant :
un logement (10) ;
un dispositif de stockage de fil, conçu pour loger un fil de coupe (45) ;
une tête de coupe (110), présentant un œillet de fil, et le fil de coupe (45) passant à travers l'œillet de fil ;
un moteur (20), conçu pour entraîner la tête de coupe (110) en rotation, pour permettre à une longueur du fil de coupe (45) qui a traversé l'œillet de fil d'effectuer un travail de coupe ; et
un mécanisme de libération, capable de libérer le fil de coupe (45), pour augmenter la longueur du fil de coupe (45) qui a traversé l'œillet de fil ; **caractérisé par**
une unité de calcul (50), configurée pour répondre à un signal de libération pour calculer l'utilisation et/ou le reste de la ligne de coupe (45) ; et
une unité de rappel, configurée pour envoyer un signal de rappel selon l'utilisation et/ou le reste de la ligne de coupe (45) calculé par l'unité de calcul (50) pour rappeler à un utilisateur.

2. Coupe-bordures (100) selon la revendication 1, dans laquelle l'unité de rappel comprend un dispositif d'affichage (52) et le dispositif d'affichage (52) est configuré pour afficher l'utilisation et/ou le reste de la ligne de coupe (45).

3. Coupe-bordures (100) selon la revendication 2, dans lequel l'unité de rappel comprend un dispositif d'affichage (52) et le dispositif d'affichage (52) délivre un résultat d'affichage lorsque le reste de la ligne de coupe (45) calculé par l'unité de calcul (50) est inférieur à une première valeur prédéfinie ou que l'utilisation du fil de coupe (45) calculée par l'unité de calcul (50) dépasse une seconde valeur prédéfinie, pour rappeler à l'utilisateur que le reste du fil de coupe (45) est insuffisant.

4. Coupe-bordures (100) selon la revendication 1 ou 2, dans lequel l'unité de rappel comprend une alarme (56), et l'alarme (56) envoie un signal d'alarme lorsque le reste de la ligne de coupe (45) calculé par l'unité de calcul (50) est inférieur à une première valeur prédéfinie ou que l'utilisation du fil de coupe (45) calculée par l'unité de calcul (50) dépasse une seconde valeur prédéfinie, pour rappeler à l'utilisateur que le reste du fil de coupe (45) est insuffisant.

5. Coupe-bordures (100) selon la revendication 4, dans lequel la plage de valeurs de la première valeur prédéfinie est de 5 % à 15 % de la somme initiale de la ligne de coupe (45), ou la première valeur prédéfinie est une quantité de 25 fois à 50 fois que le mécanisme de libération peut libérer le fil de coupe (45).

6. Coupe-bordures (100) selon la revendication 4, dans lequel la plage de valeurs de la seconde valeur prédéfinie est de 85 % à 95 % de la somme initiale de la ligne de coupe (45).

7. Coupe-bordures (100) selon la revendication 4, dans lequel l'unité de rappel comprend en outre un module de transmission sans fil, et le module de transmission sans fil est configuré pour transmettre l'utilisation et/ou le reste de la ligne de coupe (45) calculé par l'unité de calcul (50) une dernière fois à un client de téléphonie mobile de l'utilisateur.

8. Coupe-bordures (100) selon la revendication 1, dans lequel l'unité de calcul (50) comprend un calculateur (51) et un interrupteur de réenclenchement (53), le calculateur (51) peut calculer l'utilisation du fil de coupe (45) selon le signal de libération, et l'interrupteur de réenclenchement (53) est configuré pour réenclencher le calculateur (51).

9. Coupe-bordures (100) selon la revendication 8, dans lequel l'unité de calcul (50) comprend en outre une mémoire (54) et un processeur (55), la mémoire (54) est configurée pour stocker la somme initiale utilisable de la ligne de coupe (45), le processeur (55) est configuré pour acquérir la somme initiale et calculer une différence entre la somme initiale et l'utilisation de la ligne de coupe (45), et envoyer un signal d'invite lorsque la différence est inférieure ou égale à une valeur prédéfinie, et l'unité de rappel est configurée pour envoyer le signal de rappel selon le signal d'invite.

10. Coupe-bordures (100) selon la revendication 1, dans lequel l'unité de calcul (50) comprend un calculateur (51) et un interrupteur de réenclenchement (53), le calculateur (51) est configuré pour calculer le reste de la ligne de coupe (45) selon le signal de libération, et l'interrupteur de réenclenchement (53) est configuré pour réenclencher le reste de la ligne de coupe (45) dans le calculateur (51).

11. Le coupe-bordures (100) selon la revendication 10, dans lequel l'unité de calcul (50) comprend une mémoire (54) et un processeur (55), la mémoire (54) est configurée pour stocker la somme initiale utilisable de la ligne de coupe (45), le processeur (55) est configuré pour : acquérir le reste de la ligne de coupe (45) et générer un signal d'invite lorsque le reste de la ligne de coupe (45) est inférieur ou égal à une valeur prédéfinie, et l'unité de rappel est configurée pour envoyer le signal de rappel selon le signal d'invite.

12. Coupe-bordures (100) selon la revendication 1, dans lequel le mécanisme de libération répond à chaque signal de libération pour commencer à libérer le fil de coupe (45), lorsque le mécanisme de libération reçoit un signal de libération, le mécanisme de libération est démarré une fois, et la longueur du fil de coupe (45) qui a traversé l'œillet de fil est augmentée d'une fois, et l'unité de calcul (50) calcule l'utilisation et/ou le reste du fil de coupe (45) selon une quantité de fois du signal de libération.

13. Le coupe-bordures (100) selon la revendication 12, dans lequel le coupe-bordures (100) comprend en outre un interrupteur de réenclenchement manuel, et le signal de libération comprend un signal de libération manuel ; et l'interrupteur de réenclenchement manuel génère le signal de libération manuel selon une opération de l'utilisateur, le mécanisme de libération libère la ligne de coupe (45) selon le signal de libération manuel, et l'unité de calcul (50) est configurée pour calculer l'utilisation et/ ou le reste du fil de coupe (45) selon le signal de libération manuel.

14. Coupe-bordures (100) selon la revendication 12, dans lequel le signal de libération comprend un signal de libération intelligent ; et un système de libération intelligent configuré pour commander le fil de coupe (45) afin de libérer automatiquement le fil de coupe (45) est agencé dans le coupe-bordures (100), et le système de libération intelligent compare un paramètre spécifique représentant une longueur actuelle du fil de coupe (45) avec un paramètre prédéfini, et génère le signal de libération intelligent selon un résultat de la comparaison.

15. Coupe-bordures (100) selon la revendication 12, dans lequel le signal de libération comprend un signal de libération de cognement, la tête de coupe (110) comprend une tête de cognement, la tête de cognement se déplace de manière fonctionnelle entre une première position et une seconde position pour démarrer le mécanisme de libération afin de libérer le fil de coupe (45), le signal de libération de cognement est généré lorsque la tête de cognement se déplace entre la première position et la seconde position, et l'unité de calcul (50) calcule l'utilisation et/ou le reste du fil de coupe (45) selon le signal de libération de cognement.
